# EUROPEAN PATENT APPLICATION

(11) **EP 4 782 185 A2**
(43) Date of publication of application: **29.07.2026**
(21) Application number: 26184445.0
(22) Date of filing: 11.06.2026
(51) Int. Cl.: B29C 64/386, B29C 64/40, B33Y 10/00, B33Y 30/00, B33Y 50/00, B33Y 50/02

(54) **METHOD FOR GENERATING 3D PRINTING DATA, PRINTING METHOD, ELECTRONIC DEVICE, NON-TRANSITORY STORAGE MEDIUM AND COMPUTER PROGRAM PRODUCT**

(30) Priority: 10.04.2026 CN 202610478033
(71) Applicant: Shining 3D Tech Co., Ltd., Hangzhou, Zhejiang 311258 (CN)
(72) Inventor: LIU, Zhiyue, Hangzhou, 311258 (CN); JIANG, Tengfei, Hangzhou, 311258 (CN); QIU, Kaijia, Hangzhou, 311258 (CN); ZHANG, Jian, Hangzhou, 311258 (CN); JI, Chenghui, Hangzhou, 311258 (CN); LIU, Yuanchao, Hangzhou, 311258 (CN)
(74) Representative: Dai, Simin

(57) **Abstract**

The present application provides a method for generating 3D printing data, a printing method, and an electronic device. The method for generating 3D printing data includes: acquiring a 3D model (100); generating support columns (210) corresponding to at least one portion to be supported (110) in the 3D model based on the at least one portion to be supported, where an end face of the support column (210) facing the portion to be supported is a connecting surface (211), and the connecting surface (211) is spaced apart relative to the portion to be supported; generating a support head (220) between the corresponding connecting surface and the portion to be supported, where the support head (220) includes at least two sub-support members (221), each of which is connected at both ends to the corresponding connecting surface (211) and the portion to be supported (110), respectively; and generating 3D printing data based on the 3D model (100), the support columns (210) and the support head (220).

## Description

### TECHNICAL FIELD

The present application relates to the field of machinery, and in particular to a method for generating 3D printing data, a printing method, an electronic device, a non-transitory storage medium and a computer program product.

### BACKGROUND

In a 3D printing process, when a 3D model to be printed contains overhanging or bridging structures, support structures are to be created beneath the 3D model to ensure forming stability. Support structures typically include support columns and support heads. The support heads are connected to the support columns and parts of the 3D model that are to be supported. For example, the parts to be supported are located at the overhanging or bridging structures of the 3D model.

### SUMMARY

In a first aspect, one or more embodiments of the present application provide a method for generating 3D printing data.

The method for generating 3D printing data provided by one or more embodiments of the present invention includes: obtaining a 3D model; based on at least one portion to be supported in the 3D model, creating a support column corresponding to the portion to be supported, where an end face of the support column facing the portion to be supported is a connecting surface, and the connecting surface is spaced apart relative to the portion to be supported; creating a support head between the corresponding connecting surface and the portion to be supported, where the support head includes at least two sub-support members, and both ends of each sub-support member are respectively connected to the corresponding connecting surface and the portion to be supported; and generating 3D printing data based on the 3D model, the support column, and the support head.

In a second aspect, one or more embodiments of the present application provide a method for printing a 3D model.

The method for printing a 3D model provided by one or more embodiments of the present application includes: obtaining 3D printing data generated based on any one of the methods for generating 3D printing data provided by one or more embodiments of the present application; and executing a printing task based on the 3D printing data.

In a third aspect, one or more embodiments of the present application provide an electronic device.

The electronic device provided by the embodiments of the present application includes a processor and a memory, where the memory stores a program or instructions for execution on the processor; when the program or instructions are executed by the processor, the processor is caused to implement any one of the methods for generating 3D printing data provided by the embodiments of the present application and/or any one of the methods for printing a 3D model provided by the embodiments of the present application.

In a fourth aspect, one or more embodiments of the present application provide a storage medium.

The storage medium provided by the embodiments of the present application stores a program or instructions; when the program or instructions are executed by a processor, the processor is caused to implement any one of the methods for generating 3D printing data provided by the embodiments of the present application and/or any one of the methods for printing a 3D model provided by the embodiments of the present application.

In a fifth aspect, one or more embodiments of the present application provide a computer program product.

The computer program product provided by the embodiments of the present application is stored on a storage medium. When the computer program product is executed by a processor, the processor is caused to implement any one of the methods for generating 3D printing data provided by the embodiments of the present application and/or any one of the methods for printing a 3D model provided by the embodiments of the present application.

The at least one technical solution adopted in the embodiments of the present application may achieve the following beneficial effects.

In the embodiments of the present invention, a support head is provided in the gap between the connecting surface of the support column and the portion to be supported of the 3D model, with the support head connecting the support column and the portion to be supported, respectively. The support head includes at least two sub-support members. Thus, by replacing the columnar structures in related arts with sub-support members, the contact area between the support head and the portion to be supported of the 3D model is reduced, while ensuring that the support head possesses a sufficiently large equivalent circular outer contour. Consequently, by ensuring the support head possesses a sufficiently large equivalent circular outer contour, the support structure achieves sufficient bonding strength with the portion to be supported of the 3D model, thereby preventing the model from detaching during the printing process. Furthermore, by reducing the contact area between the support head and the portion to be supported of the 3D model, the support structure becomes easier to remove after printing is complete.

### BRIEF DESCRIPTION OF DRAWINGS

To more clearly illustrate the technical solutions in the embodiments of the present application or the related art, a brief introduction to the drawings required for the description of the embodiments or the related art is provided below. It is evident that the drawings described below merely illustrate some embodiments of the present application; a person skilled in the art may derive other drawings from these without requiring inventive effort.
FIG. 1 is a flowchart of a method for generating 3D printing data provided by embodiments of the present application.
FIG. 2 is a schematic diagram of a 3D model provided by embodiments of the present application.
FIG. 3 is a schematic diagram of a 3D model and a support structure provided by embodiments of the present application.
FIG. 4 is a partial schematic diagram of region A of the 3D model and support structure shown in FIG. 3.
FIG. 5 is a partial schematic diagram of a meshed three-dimensional model provided by embodiments of the present application.
FIG. 6 is a schematic diagram of a point to be supported and discrete points of a three-dimensional model provided by embodiments of the present application.
FIG. 7 is a schematic diagram of a point to be supported, discrete points, and offset discrete points of a three-dimensional model provided by embodiments of the present application.
FIG. 8 is a partial schematic diagram of a three-dimensional model and a support structure provided by embodiments of the present application.
FIG. 9 is a schematic diagram of a support structure provided by embodiments of the present application.
FIG. 10 is a partial schematic diagram of region B of the support structure shown in FIG. 9.
FIG. 11 is a schematic diagram of a cross-section of a first type of support head provided by an embodiment of the present application, taken in a section perpendicular to the distribution axis.
FIG. 12 is a schematic diagram of a cross-section of a second type of support head provided by an embodiment of the present application, taken in a section perpendicular to the distribution axis.
FIG. 13 is a schematic diagram of a cross-section of a third type of support head provided by an embodiment of the present application, taken in a section perpendicular to the distribution axis.
FIG. 14 is a schematic diagram of a cross-section of a fourth type of support head provided by an embodiment of the present application, taken in a section perpendicular to the distribution axis.
FIG. 15 is a schematic diagram of a cross-section of a fifth type of support head provided by an embodiment of the present application, taken in a section perpendicular to the distribution axis.
FIG. 16 is a schematic diagram of a cross-section of a sixth type of support head provided by an embodiment of the present application, taken in a section perpendicular to the distribution axis.
FIG. 17 is a schematic diagram of an electronic device provided by embodiments of the present application.
FIG. 18 is a schematic diagram of a 3D printing device provided by embodiments of the present application.

Description of Reference Numerals:
100-3D model; 110-portion to be supported; 111- point to be supported; 112-discrete point; 112a-first discrete point; 112b-second discrete point; 113-offset discrete point;
200-support structure; 210-support column; 211-connecting surface; 220-support head; 221-sub-support member; 222-distribution axis;
300-electronic device; 310-processor; 320-memory; 330-display unit; 331-display panel; 340-user input unit; 341-touch panel; 342-other input devices; 350-interface unit;
400-3d printing device; 410-drive assembly; 420-printing platform; 430-material holding assembly; 440-optical engine.

### DETAILED DESCRIPTION

To make the objectives, technical solutions, and advantages of the present application clearer, the technical solutions of the present application will be described clearly and completely below with reference to specific embodiments of the present application and the corresponding drawings. Obviously, the embodiments described are only some of the embodiments of the present application, not all of them. All other embodiments obtained by a person skilled in the art based on the embodiments of the present application without requiring creative labor fall within the scope of protection of the present application.

In the description of the present application, it should be noted that, unless otherwise explicitly specified or limited, the terms "mounted," "connected," and "coupled" should be interpreted broadly. For example, they may refer to a fixed connection, a detachable connection, or an integral connection; they may refer to a direct connection or an indirect connection via an intermediate medium; or they may refer to internal communication between two components. A person skilled in the art can understand the specific meanings of the above terms in the context of the present application based on the specific circumstances.

Furthermore, although the terms used in the present application are selected from those commonly known and used, some terms mentioned in the specification of the present application may have been chosen by the inventor based on his or her judgment, and their detailed meanings are explained in the relevant sections of this description.

Furthermore, the present application should be understood not only by the actual terms used, but also by the meaning implied by each term.

In related arts, a support head is generally a cylindrical structure with a cross-sectional area smaller than that of a support column, or support head may feature a conical structure, an inverted conical structure, or a spherical end. When the support head is a cylindrical structure, it offers high strength but is difficult to remove; when the support head features a conical cylindrical, an inverted conical cylindrical, or a spherical end, it can be easily separated from the 3D model, but there is a risk of the model detaching from the build platform during the printing process.

The technical solutions provided by various embodiments of the present application are described in detail below with reference to the accompanying drawings.

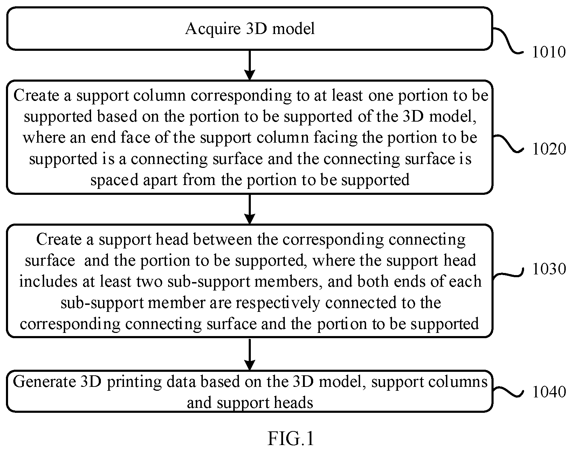

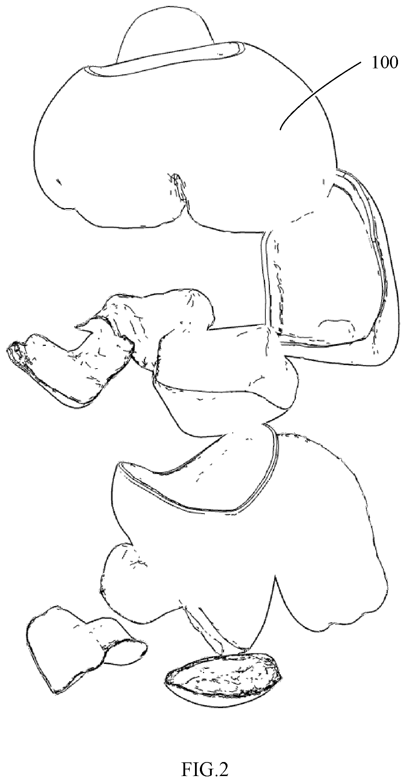

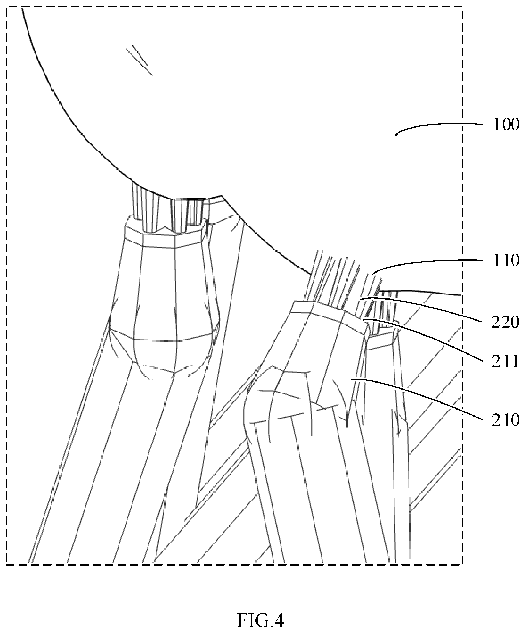

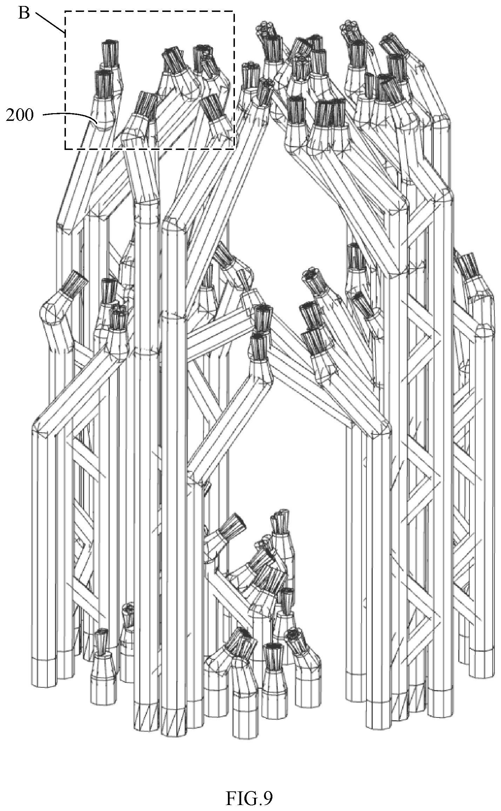

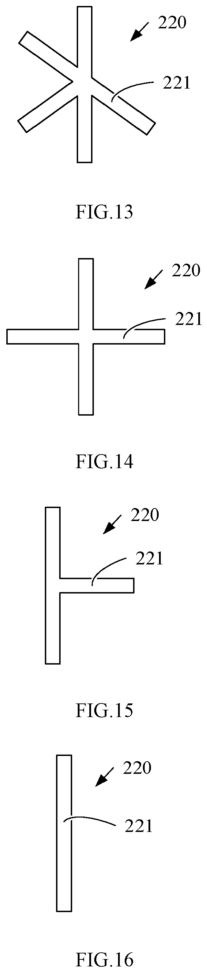

Embodiments of the present application provide a method for generating three-dimensional (3D) printing data. Referring to FIGs. 1 through 16, the method for generating 3D printing data provided by the embodiments of the present application includes step 1010 to step 1040.

Step 1010: acquire a 3D model.

In some embodiments, when an entity executing the method for generating 3D printing data is an electronic device, a user may create a 3D model 100 on the electronic device and then send the 3D model 100 to a module of the electronic device configured to execute the method for generating 3D printing data. Alternatively, a user may create a 3D model 100 using another electronic device and then send the 3D model 100 to the module of the electronic device used to execute the method for generating 3D printing data. Thus, the module configured to execute the method for generating 3D printing data may acquire the 3D model 100.

Step 1020: Based on at least one portion to be supported of the 3D model, create a support column corresponding to the at least one portion to be supported, where an end face of the support column facing the portion to be supported serves as a connecting surface, and the connecting surface is spaced apart from the portion to be supported.

In some embodiments, after acquiring the 3D model 100, one or more support columns 210 corresponding to at least one portion to be supported 110 of the 3D model 100 may be created based on the at least one portion to be supported 110 of the 3D model 100. An end face of the support column 210 facing the portion to be supported 110 serves as a connecting surface 211, and the connecting surface 211 is spaced apart from the portion to be supported 110. A gap region is formed between the connecting surface 211 and the portion to be supported 110. This gap region is used for the subsequent generation of one or more support heads 220 so that the support column 210 is connected to the portion to be supported 110 of the 3D model 100 via the support heads 220.

It should be noted that, for example, the 3D model 100 is one or more dental prostheses. The 3D model 100 does not include support columns. However, considering that during the subsequent printing process of the 3D model 100, if the 3D model 100 is not supported, some parts of the 3D model 100 may be difficult to form in their predetermined positions. Therefore, it is desired to create a support structure 200 to support the portion to be supported 110 of the 3D model 100. It should also be noted that, in some embodiments, support columns 210 may be created first after acquiring the 3D model 100.

Step 1030: Create a support head between a connecting surface and a portion to be supported that are corresponding to each other, where the support head includes at least two sub-support members, each of which is connected at both ends to the connecting surface and the portion to be supported that are corresponding to each other, respectively.

In some embodiments, after generating the support column 210, a support head 220 may be further created between the connecting surface 211 of the support column 210 and the portion to be supported 110 that are corresponding to each other. The support head 220 includes at least two sub-support members 221, with each sub-support member 221 having both ends connected to the connecting surface 211 and the portion to be supported 110 that are corresponding to each other, respectively. In this way, the support head 220 can be used to connect the support column 210 to the portion to be supported 110 of the 3D model 100.

Step 1040: Generate 3D printing data based on the 3D model, the support column, and the support head.

After generating the support structure 200 based on the 3D model 100, 3D printing data may be generated based on the 3D model 100 and the support structure 200.

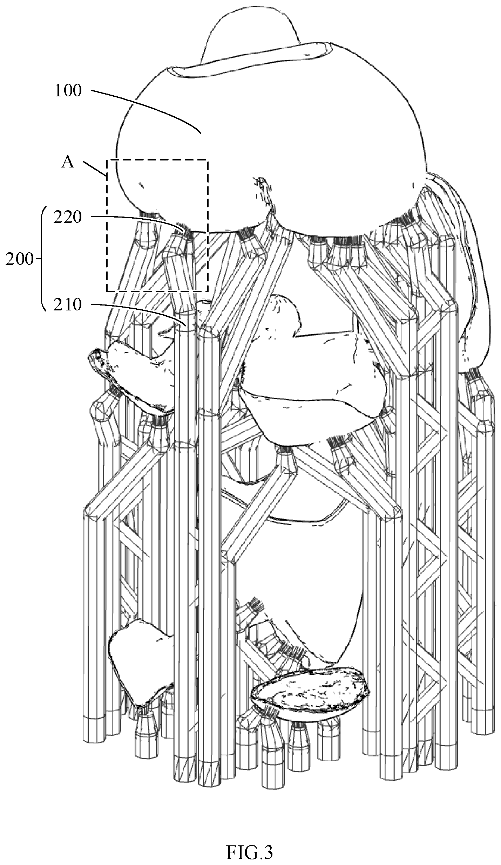

In an embodiment of the present application, the support structure 200 includes a support column 210 and a support head 220. During the printing of the 3D model 100, the support structure 200 is printed and formed together with the 3D model 100. For example, as shown in FIG. 3, the 3D model 100 and the support structure 200 may be printed layer by layer in a bottom-up direction. After printing is complete, the support structure 200 may be removed, leaving the 3D model 100. For example, the support column 210 may first be snapped off at a junction between the support column 210 and the support head 220; subsequently, the support head 220 may be removed by grinding to retain the 3D model 100.

In this manner, in the embodiments of the present application, a support head 220 is provided in the gap between the connecting surface 211 of the support column 210 and the portion to be supported 110 of the 3D model 100, with the support head 220 connecting the support column 210 and the portion to be supported 110, respectively. The support head 220 includes at least two sub-support members 221. Thus, the contact area between the support head 220 and the portion to be supported 110 of the 3D model 100 is reduced, while ensuring that the support head 220 possesses a sufficiently large equivalent circular outer contour. Consequently, by ensuring that support head 220 has a sufficiently large equivalent circular outer contour, sufficient connection strength is maintained between the support structure 200 and the portion to be supported 110 of 3D model 100, thereby preventing the model from detaching during the printing process of 3D model 100. By reducing the contact area between the support head 220 and the portion to be supported 110 of the 3D model 100, the support structure 200 may be more easily removed after printing is complete.

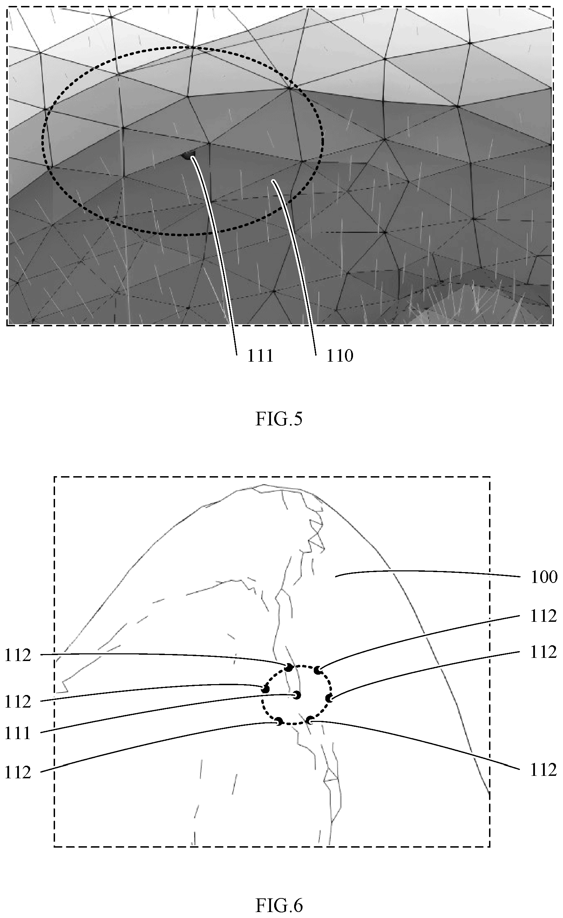

Referring to FIGs. 6 through 16, in some embodiments, the sub-support members 221 are circumferentially distributed about a distribution axis 222 passing through the connecting surface 211 and the portion to be supported 110, where each sub-support member 221 extends in a direction away from the distribution axis 222. Sides of the sub-support members 221 facing the distribution axis 222 are interconnected. This simplifies the construction of the support head 220.

By way of example, each sub-support member 221 is a rib. Each sub-support member 221 extends from the distribution axis 222 in a direction away from the distribution axis 222. Each sub-support member 221 extends from the connecting surface 211 toward the portion to be supported 110 in a manner parallel to the distribution axis 222.

By way of example, the sub-support members 221 are distributed circumferentially, and their outer/outermost edges or outer/outermost vertices may define a circumscribed circle. A diameter of the circumscribed circle is the diameter of the equivalent circle described above. It is understood that the greater the dimension of the sub-support members 221 in the direction away from the distribution axis 222, the larger the diameter of the circumscribed circle of the support head 220, and the better the supporting effect of the support structure 200. The smaller the dimension of each sub-support member 221 in the direction away from the distribution axis 222, the smaller the diameter of the circumscribed circle of the support head 220, and the easier it is to remove the support structure 200.

In some embodiments, a range of values for the diameter of the circumscribed circle of the support head 220 may be determined experimentally for reference during the creation of the support head 220, thereby setting a reasonable diameter for the circumscribed circle of the support head 220.

In some embodiments, each sub-support member 221 may be a support strip. The support strips are respectively connected to the connecting surface 211 of the support column 210 and the portion to be supported 110 of the 3D model 100, and are distributed at intervals. The circumscribed circle of the support strips form an equivalent circular outer contour. For example, the support strips may be arranged in an array, or they may be distributed circumferentially.

It should be noted that, in some embodiments, the sub-support members 221 are used to connect the connecting surface 211 of the support column 210 and the portion to be supported 110 of the 3D model 100 in a distributed manner. Under the premise that the connection region between the support head 220 formed by the sub-support members 221 and the portion 110 to be supported of the 3D model 100 possesses a sufficiently large equivalent circular outer contour, the contact area between the support head 220 and the portion to be supported 110 of the 3D model 100 is reduced, thereby improving ease of removal of the support structure 200. Consequently, the sub-support members 221 of the support head 220 may have various shapes, which are not listed here in detail.

In some embodiments, the sub-support members 221 may be directly connected to one another. Alternatively, a cylindrical sub-support member may be positioned in a center, with other sub-support members connected to the cylindrical sub-support member.

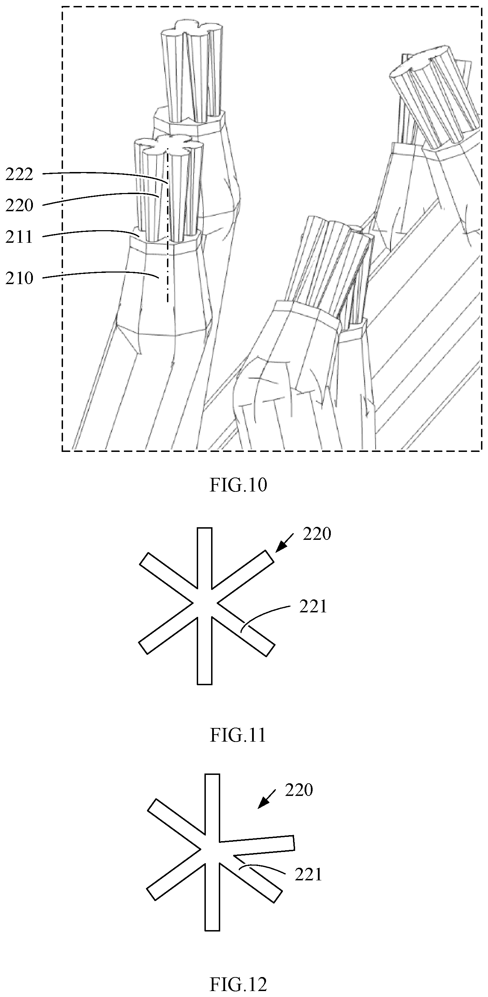

Referring to FIG. 10, in some embodiments, the circumferential portion of the support head 220 includes recesses that is recessed toward a central region of the support head 220, to reduce the area of the connecting portion where the support head 220 connects to the portion to be supported 110 of the 3D model 100, thereby improving the ease of removal of the support head 220.

In some embodiments, the distribution axis 222 is perpendicular to the connecting surface 211. In some embodiments, the distribution axis 222 passes through the center of the connecting surface 211. This simplifies the structure of the support head 220 and reduces the difficulty of creation of the support head 220.

In some embodiments, as described above, creating the support head 220 between the connecting surface 211 and the portion to be supported 110 that are corresponding to each other includes: determining whether a geometric parameter of the portion to be supported 110 falls within a preset parameter range; if the geometric parameter of the potion to be supported 110 falls within the preset parameter range, creating a support head 220 of preset dimensions between the corresponding connecting surface 211 and the portion to be supported 110. If the geometric parameter of the portion to be supported 110 does not fall within the preset parameter range, creating a customized support head 220 between the corresponding connecting surface 211 and the portion to be supported 110, where dimensions of the customized support head 220 differ from those of the support head 220 with preset dimensions.

For example, for a portion to be supported 110 with a relatively flat topography, a support head 220 with preset dimensions may be created between the connecting surface 211 and the portion to be supported 110 with a relatively flat topography. For a portion to be supported 110 with relatively significant topographical variations, a customized support head 220 may be created between the connecting surface 211 and the portion to be supported 110 with relatively significant topographical variations based on geometric parameters of the portion to be supported 110 with relatively significant topographical variations. The portion to be supported 110 may be classified as having a relatively flat topography or relatively significant topographical variations by quantifying its geometric parameters.

For example, geometric parameters such as local curvature and normal direction of the portion to be supported 110 may be used to determine whether the portion to be supported 110 has a relatively flat topography or relatively significant topographical variations.

In this way, creating a support head 220 of predetermined dimensions between the connecting surface 211 and the portion to be supported 110 with a relatively flat topography reduces the difficulty of creating the support head 220; while generating a customized support head 220 between the connecting surface 211 and the portion to be supported 110 with relatively significant topographical variations allows the support head 220 to better meet the support requirements of the portion to be supported 110 with relatively significant topographical variations.

Referring to FIG. 5, in some embodiments, the 3D model 100 is a meshed 3D model. FIG. 5 illustrates the 3D model 100 as being triangular meshed. It should be understood that, in other embodiments, the 3D model 100 may be quadrilateral meshed or a mixed-shape meshed, for example, the mixed shapes including both triangles and quadrilaterals. The specific mesh shapes of the 3D model 100 are not listed here in detail.

In some embodiments, prior to determining whether the geometric parameter of the portion to be supported 110 fall within the preset parameter range, the method for generating 3D printing data further includes: determining an average curvature of vertex curvatures of meshes in a region where the portion to be supported 110 is located, where the average curvature is the average value of the vertex curvatures of the meshes in the region where the portion to be supported 110 is located. The geometric parameter of the portion to be supported 110 includes the average curvature.

For example, the vertex curvatures of the meshes in the region where the portion to be supported 110 is located may be calculated first. For example, a projection of the portion to be supported 110 in a plane parallel to the connecting surface 211 is circular. There are 10 triangular meshes in the portion to be supported 110, and the vertex curvatures of each triangular mesh can be calculated separately. Furthermore, the vertex curvatures of the triangular meshes can be averaged to obtain the average curvature. It should be noted that since the meshing of the outer surface of the 3D model 100 and the calculation of the vertex curvature of each mesh can be implemented by referring to related arts, specific implementation methods will not be elaborated upon here.

For example, when the average curvature of the portion to be supported 110 is less than or equal to 2.5, the portion to be supported 110 is considered to have a relatively flat topography, and a support head 220 of predetermined dimensions may be formed between the connecting surface 211 and the portion to be supported 110 having a relatively flat topography. For example, the support head 220 with the preset dimensions may have the following specifications: six sub-support members 221, evenly circumferentially distributed (as shown in FIG. 11), each with a thickness of 1 mm and a width of 4 mm.

For example, when the average curvature of the portion to be supported 110 exceeds 2.5, the portion to be supported is considered to have relatively significant topographical variations, and a customized support head 220 may be formed between the connecting surface 211 and the portion to be supported 110 having relatively significant topographical variations. For example, on a basis of a support head 220 with preset dimensions, the thickness and/or width of the sub-support member 221 may be appropriately increased. For example, if the thickness of the support head 220 with preset dimensions is D, the thickness of the sub-support member of the customized support head 220 is 1.2D. For another example: if the width of the sub-support member of the support head 220 with the preset dimensions is W, the width of the sub-support member of the customized support head 220 is 1.2W.

It should be noted that the average curvature of the portion to be supported 110 reflects the degree of undulation of the portion to be supported 110. For example, if a part of the portion to be supported 110 includes a cusp, the portion to be supported 110 exhibits substantial degree of undulation. When the center of the support head 220 is positioned opposite the cusp, edges of the sub-support members 221 of the support head 220 are to extend a considerable distance to make contact with the periphery of the cusp. Consequently, because the edges of the sub-support members 221 are relatively long, the strength of the support head 220 is reduced; therefore, the strength of the support head 220 may be enhanced by increasing the thickness and/or width of the sub-support members 221.

Referring to FIGs. 5 through 10, in some embodiments, the portion to be supported 110 includes a point to be supported 111, and the distribution axis 222 passes through the point to be supported 111.

When the geometric parameters of the portion to be supported 110 do not fall within the preset parameter range, creating a customized support head 220 between the corresponding connecting surface 211 and the portion to be supported 110, includes: creating a preset number of discrete points 112 on the portion to be supported 110 when the geometric parameters of the portion to be supported 110 do not fall within the preset parameter range, where a distance between each discrete point 112 and the distribution axis 222 is equal to the width of the sub-support member of the support head 220 with the preset dimensions, and the discrete points 112 are distributed circumferentially relative to the distribution axis 222; determining distances between the discrete points 112 and the connecting surface 211, where discrete points 112 whose distance from the connecting surface 211 is less than or equal to a first threshold are designated as first discrete points 112a; and generating sub-support members 221 that respectively connect the first discrete points 112a to the connecting surface 211.

For example, when the average curvature of the portion to be supported 110 is relatively large, six discrete points 112 may be created on the portion to be supported 110. A distance between each discrete point 112 and the distribution axis 222 is equal to the width of the sub-support member of the support head 220 which has preset dimensions, and the discrete points 112 are distributed circumferentially relative to the distribution axis 222. That is, the discrete points are all on a circle with a center on the distribution axis.

Furthermore, the distances between each of the six discrete points 112 on the portion to be supported 110 and the connecting surface 211 may be determined. For example, let the distance between the point to be supported 111 and the connecting surface 211 be L. If the distance between a discrete point 112 and the connecting surface 211 is less than or equal to 1.5L, the discrete point 112 is considered a first discrete point 112a. If the distance between a discrete point 112 and the connecting surface 211 is greater than 1.5L, the discrete point 112 is considered a second discrete point 112b. It is understood that the distance between the second discrete point 112b and the connecting surface 211 is relatively large. If a sub-support member 221 connecting the second discrete point 112b and the connecting surface 211 is created, the edge length of the sub-support member 221 will be relatively large. The support strength of this sub-support member 221 is not high, and it is inconvenient to remove the sub-support member 221 in subsequent steps. Therefore, only the sub-support members 221 connecting each first discrete point 112a to the connecting surface 211 may be created first.

Furthermore, in some embodiments, among the discrete points 112, the discrete points 112 that have a distance from the connecting surface 211 greater than the first threshold are designated as second discrete points 112b.

When the geometric parameters of the portion to be supported 110 do not fall within the preset parameter range, creating a customized support head 220 between the corresponding connecting surface 211 and the portion to be supported 110 further includes: performing a positional offset on the second discrete points 112b to create offset discrete points 113, where the offset discrete points 113 are located on the portion to be supported 110, the distance between each of the offset discrete points 113 and the distribution axis 222 is equal to the width of the sub-support member of the support head 220 with the preset dimensions; determining the distances between the offset discrete points 113 and the connecting surface 211; and, when the distance between an offset discrete point 113 and the connecting surface 211 is less than or equal to the first threshold, creating a sub-support member 221 that connects the offset discrete point 113 and the connecting surface 211.

In some embodiments, when the number of first discrete points 112a is at least two, the second discrete points 112b may be positionally offset in the circumferential direction between two adjacent first discrete points 112a, such that the offset discrete points 113 are located in the circumferential direction between two adjacent first discrete points 112a.

In some embodiments, when the geometric parameters of the portion to be supported 110 do not fall within the preset parameter range, creating a customized support head 220 between the corresponding connecting surface 211 and the portion to be supported 110, further includes: in response to the distance between the offset discrete point 113 and the connecting surface 211 exceeding the first threshold, omitting creation of a sub-support member 221 between the offset discrete point 113 and the connecting surface 211.

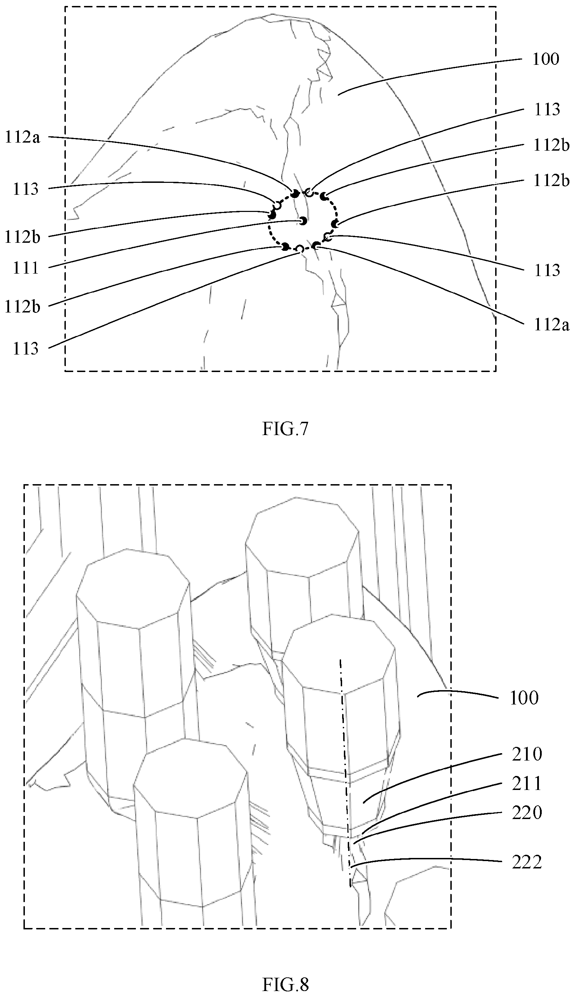

Referring to FIGs. 6 and 7, when the average curvature of the portion to be supported 110 is relatively large, six discrete points 112 are created on the portion to be supported 110. Two of the discrete points 112 are located at protruding positions on the portion to be supported 110. These two discrete points 112 have a small distance from the connecting surface 211 and are first discrete points 112a. The other four discrete points 112 are located on the outer periphery of the protruding positions; these four discrete points 112 have a relatively large distance from the connecting surface 211 and are second discrete points 112b.

For each of the two first discrete points 112a, a corresponding sub-support member 221 connecting the first discrete point 112a and the connecting surface 211 may be created. For the four second discrete points 112b, each of the four second discrete points 112b may be positionally offset. For example, after offsetting the positions of the four second discrete points 112b individually, four offset discrete points 113 are obtained. If some or all of the four offset discrete points 113 are at a relatively small distance from the connecting surface 211, a sub-support member 221 connecting the offset discrete point 113 to the connecting surface 211 may be created for each of the offset discrete points 113 with the relatively small distance to the connecting surface. For each of the offset discrete points 113 with a relatively large distance from the connecting surface, the creation of sub-support members 221 connecting the offset discrete point 113 and the connecting surface 211 may be omitted.

For example, the second discrete point 112b may be offset once. If the distance between the resulting offset discrete point 113 and the connecting surface 211 remains large after a single offset, the creation of the sub-support member 221 corresponding to the second discrete point 112b is abandoned. Alternatively, the second discrete point 112b may be offset multiple times; for example, it may be offset up to three times. If the distance between the offset discrete point 113 obtained after the second offset and the connecting surface 211 is small, a sub-support member 221 connecting the offset discrete point 113 and the connecting surface 211 is created. If, after three offsets, the offset discrete point 113 is at a relatively large distance from the connecting surface 211, the creation of the corresponding sub-support member 221 may be abandoned.

For example, six discrete points 112 were initially created, of which two discrete points 112 are at a relatively small distance from the connecting surface 211, belonging to the first discrete points 112a. The other four discrete points 112 have a relatively large distance from the connecting surface 211 and are second discrete points 112b. After the four second discrete points 112b are positionally offset, if only two of them are offset to positions with a relatively small distance from the connecting surface 211, then four sub-support members 221 may be created. The other two second discrete points 112b, after positional offset, fail to shift to positions with a relatively smaller distance from the corresponding connecting surface 211, and thus no sub-support members 221 are created.

In some embodiments, when the geometric parameters of the portion to be supported 110 do not fall within a preset parameter range, creating a customized support head 220 between the corresponding connecting surface 211 and the portion to be supported 110, further includes: when the number of sub-support members 221 of the customized support head 220 is less than the number of sub-support members 221 of the support head 220 with the preset dimensions, increasing the width and/or thickness of each sub-support member 221 on a basis of the sub-support members 221 of the support head 220 with the preset dimensions, so that the width of the sub-support members 221 of the customized support head 220 is greater than the width of each of the sub-support members 221 of the support head 220 with the preset dimensions, and/or the thickness of the sub-support members 221 of the customized support head 220 is greater than the thickness of each of the sub-support members 221 of the support head 220 with the preset dimensions.

For example, the preset number of discrete points 112 is 6; ideally, 6 sub-support members 221 should be created. However, in practice, only 4 sub-support members 221 are created. It is understood that the support strength of the support head 220 formed by 4 sub-support members 221 is less than that of the support head 220 formed by 6 sub-support members 221; therefore, the support strength of the support head 220 can be enhanced by increasing the width and/or thickness of each sub-support member 221.

For example, per unit decrease in the number of sub-support members 221, the width of the sub-support member 221 is increased by 0.1 times the width of the sub-support member 221 of a support head with the preset dimensions. For example, if the width of a sub-support member 221 of the support head with the predetermined dimensions is W, reduce the number of sub-support members 221 by one, then an actual width of the sub-support member 221 is 1.1W; reduce the number by two, then an actual width of the sub-support member 221 is 1.2W. For example, the upper limit for the width of sub-support member 221 may be set to 1.5W.

Referring to FIGs. 11 through 16, in some embodiments, the support head 220 may include six sub-support members 221 evenly circumferentially distributed. Alternatively, the support head 220 may include six sub-support members 221 that are not uniformly circumferentially distributed. Alternatively, the support head 220 may include five, four, three, or two sub-support members 221. By way of example, a support head 220 of the predetermined dimensions may include 2 to 8 sub-support members 221. Alternatively, those skilled in the art may flexibly determine the number of sub-support members 221 included in a support head 220 of the predetermined dimensions as needed when implementing the solutions provided by the embodiments of the present application, which will not be further elaborated upon here. For example, the sub-support members 221 of the support head 220 may be arranged in a Y-shape, cross-shape, or multi-lobe configuration.

In some embodiments, the cross-sectional area of the support head 220 gradually decreases in the direction from the portion to be supported 110 toward the corresponding connecting surface 211. For example, an area of a section of the support head 220 passing through the point to be supported 111 is S, and an area of the end face of the support head 220 connected to the connecting surface 211 is 0.6S to 0.8S. In this way, the predetermined break point between the support structure 200 and the 3D model 100 is set at the end of the support head 220 that connects to the connecting surface 211. This facilitates the separation of the support head 220 from the support column 210 at the end of the support head 220 connecting to the connecting surface 211 during the subsequent removal of the support structure 200. For example, the residual support head 220 on the 3D model 100 can subsequently be removed by grinding.

It should be noted that in related arts, the predetermined break point between the support structure and the 3D model is set at the end of the support structure facing the 3D model. Consequently, during the removal of the support structure, some material from the 3D model detaches along with the support structure, which can easily create indentations on the 3D model and cause damage to it. In contrast, the solution provided by the embodiments of the present application ensures that, during the removal of the support structure 200, the support head 220 and the support column 210 fracture at the end of the support head 220 connected to the connecting surface 211, thereby preventing damage to the 3D model 100.

By way of example, the outer periphery of the cross-section of the support head 220 passing through the point to be supported 111 forms a first envelope circle, and the outer periphery of the end face of the support head 220 connected to the connecting surface 211 forms a second envelope circle. The radius of the first envelope circle is R, and the radius of the second envelope circle is 0.7R to 0.9R. For example, the radius of the second envelope circle is 0.8R.

It should be noted that a shrinkage ratio of the support head 220 in the direction from the portion to be supported 110 toward the corresponding connecting surface 211 is controlled by shrinkage parameters. For different printing materials, the shrinkage parameters may be determined through printing experiments. Furthermore, the area of the end face of the support head 220 connected to the connecting surface 211 is smaller than the area of the connecting surface 211.

In some embodiments, by calculating connected dimensions of the 3D model 100 in the positive Z-axis direction at the supported positions of the 3D model 100, a pull-out force required at a current position may be estimated. It should be noted that the Z-axis refers to the axis parallel to the vertical direction of the printing device during the printing process. The dimensions of the support head 220 may be adjusted based on the calculation results. For example, if the current model has sampled 10 supported positions, current support parameters can predict the pull-out force that 10 support structures 200 at these 10 supported positions can provide. If the pull-out force provided by these 10 support structures 200 is less than the weight of the 3D model 100, the width and/or thickness of each sub-support member 221 may be appropriately increased to ensure successful printing. It should be noted that specific adjustment methods can be experimentally verified based on machine and materials.

Embodiments of the present application provide a method for printing a 3D model. The method for printing a 3D model provided by the embodiments of the present application includes: obtaining 3D printing data created based on any one of the methods for generating 3D printing data provided by the embodiments of the present application; and executing a printing task based on the 3D printing data.

Embodiments of the present application provide an electronic device. The electronic device provided by the embodiments of the present application includes a processor and a memory, where the memory stores programs or instructions for execution on the processor. When the programs or instructions are executed by the processor, the processor implements any one of the methods for generating three-dimensional printing data provided by the embodiments of the present application and/or any one of the methods for printing a three-dimensional model provided by the embodiments of the present application.

By way of example, the electronic device may be a laptop, a desktop computer, or a tablet, among others. Alternatively, the electronic device may be a mobile phone.

Embodiments of the present application provide a storage medium on which programs or instructions are stored. When the program or instructions are executed by a processor, the processor implements any one of the methods for generating three-dimensional printing data provided by the embodiments of the present application and/or any one of the methods for printing a three-dimensional model provided by the embodiments of the present application.

Embodiments of the present application provide a computer program product, where the computer program product is stored on a storage medium, and when executed by a processor, the processor implements any one of the methods for generating three-dimensional printing data provided by the embodiments of the present application and/or any one of the methods for printing a three-dimensional model provided by the embodiments of the present application.

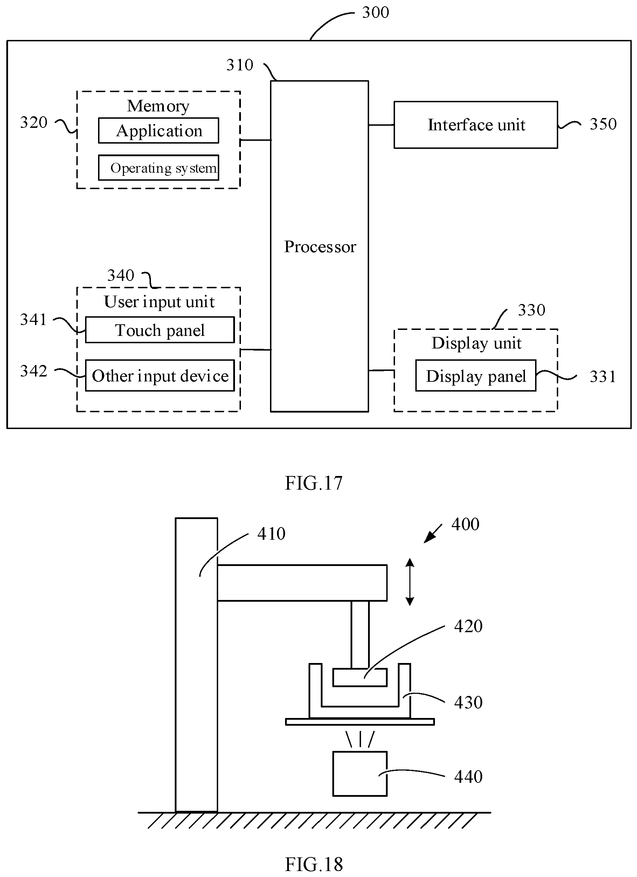

Referring to FIG. 17, in some embodiments, the electronic device 300 includes: a processor 310 and a memory 320. Furthermore, the electronic device 300 may also include: a display unit 330, a user input unit 340, and an interface unit 350.

Those skilled in the art will understand that the electronic device 300 may also include a power source (such as a battery) for supplying power to the various components. The power source may be logically connected to the processor 310 via a power management system, thereby enabling functions such as charging, discharging, and power consumption management through the power management system. The electronic device structure shown in FIG. 17 does not limit the electronic device. The electronic device may include more or fewer components than shown, or may combine certain components, or have a different component arrangement, which will not be elaborated upon here.

Processor 310 may include one or more processing units. Optionally, processor 310 may integrate an application processor and a modem processor, where the present application processor primarily handles operations related to the operating system, user interface, and applications, while the modem processor primarily handles wireless communication signals, such as a baseband processor. It should be understood that the aforementioned modem processor may also be separate from processor 310.

Memory 320 may be used to store software programs and various types of data. Memory 320 may primarily include a first storage area for storing programs or instructions and a second storage area for storing data, where the first storage area may store an operating system, applications or instructions required for at least one function (such as audio playback or image playback), and the like. Furthermore, memory 320 may include volatile memory or non-volatile memory, or memory 320 may include both volatile and non-volatile memory. Non-volatile memory may include Read-Only Memory (ROM), Programmable Read-Only Memory (PROM), Erasable Programmable Read-Only Memory (EPROM), Electrically Erasable Programmable Read-Only Memory (EEPROM), or flash memory. Volatile memory may be Random Access Memory (RAM), Static RAM (SRAM), Dynamic RAM (DRAM), Synchronous DRAM (SDRAM), Double Data Rate Synchronous DRAM (Double Data Rate SDRAM, DDRSDRAM), Enhanced SDRAM (ESDRAM), Synchronous Link DRAM (SLDRAM), and Direct Rambus RAM (DRRAM). The memory 320 in the embodiments of the present application includes, but is not limited to, these and any other suitable types of memory.

The display unit 330 may include a display panel 331, which may be configured as a liquid crystal display, an organic light-emitting diode display, or the like.

The user input unit 340 includes at least one of a touch panel 341 and other input device 342. The touch panel 341 is also referred to as a touchscreen. The touch panel 341 may include two components: a touch detection device and a touch controller. Other input device 342 may include, but is not limited to, a physical keyboard, function keys (such as volume control buttons, power buttons, etc.), a trackball, a mouse, and a joystick; which will not be described in further detail here.

The interface unit 350 may be used to connect to other peripheral devices. For example, the interface unit 350 may be connected to other electronic devices via a cable.

In some embodiments, the electronic device may be a 3D printing device. Referring to FIG. 18, the 3D printing device 400 may include a drive assembly 410, a printing platform 420, a material holding assembly 430, and an optical engine 440. Furthermore, the 3D printing device 400 also includes a processor and a memory.

The drive assembly 410 is configured to drive the printing platform 420 to move up and down relative to the material holding assembly 430 to print a 3D object. The material holding assembly 430 may include a fully transparent or partially transparent base plate, as well as a transparent liquid film of uniform thickness covering the base plate. For example, during the execution of a printing task by the 3D printing device 400, the printing platform 420 first moves to a position where it is separated from the base plate of the material holding assembly 430 by a layer of printing material. Light from the optical engine 440 cures the printing material beneath the printing platform 420. Subsequently, the printing platform 420 moves upward by one layer, and light from the optical engine 440 then cures the printing material between the cured layer and the base plate of the material holding assembly 430. In this manner, by driving the printing platform 420 to rise layer by layer and using light from the optical engine 440 to cure the printing material layer by layer, the printing of the three-dimensional object is completed.

It should be noted that, in this document, relational terms such as "first" and "second" are used merely to distinguish one entity or operation from another, and do not necessarily require or imply any such actual relationship or sequence between these entities or operations. Furthermore, the terms "including," "including," or any other variants thereof are intended to cover non-exclusive inclusion, such that a process, method, article, or apparatus including a series of elements includes not only those elements but also other elements not explicitly listed, or elements inherent to such a process, method, article, or apparatus.

Although embodiments of the present application have been illustrated and described, it will be understood by those skilled in the art that various changes, modifications, substitutions, and variations may be made to these embodiments without departing from the principles and spirit of the present application, and the scope of the present application is defined by the appended claims and their equivalents.

## Claims

1. A method for generating 3D printing data, comprising:
acquiring a 3D model (100);
based on at least one portion to be supported (110) of the 3D model (100), creating a support column (210) corresponding to the at least one portion to be supported (110), wherein an end face of the support column (210) facing the portion to be supported (110) is a connecting surface (211), and the connecting surface (211) is spaced apart from the portion to be supported (110);
creating a support head (220) between the corresponding connecting surface (211) and the portion to be supported (110), wherein the support head (220) comprises at least two sub-support members (221), and both ends of each sub-support member (221) of the sub-support members (221) are respectively connected to the corresponding connecting surface (211) and the portion to be supported (110); and
generating the 3D printing data based on the 3D model (100), the support column (210), and the support head (220).

2. The method for generating 3D printing data according to claim 1, wherein the sub-support members (221) are circumferentially distributed about a distribution axis (222) passing through the connecting surface (211) and the portion to be supported (110).

3. The method for generating 3D printing data according to claim 2, wherein the sub-support members (221) extend in directions away from the distribution axis (222), and sides of the sub-support members (221) facing the distribution axis (222) are interconnected.

4. The method for generating 3D printing data according to any one of claims 1 to 3, wherein creating the support head (220) between the corresponding connecting surface (211) and the portion to be supported (110) comprises:
determining whether a geometric parameter of the portion to be supported (110) falls within a preset parameter range;
in response to determining the geometric parameter of the portion to be supported (110) falling within the preset parameter range, creating a support head (220) with preset dimensions between the corresponding connecting surface (211) and the portion to be supported (110); and
in response to determining the geometric parameter of the portion to be supported (110) does not fall within the preset parameter range, creating a customized support head (220) between the corresponding connecting surface (211) and the portion to be supported (110), wherein dimensions of the customized support head (220) differ from those of the support head (220) with the preset dimensions.

5. The method for generating 3D printing data according to claim 4, wherein the 3D model (100) is a meshed 3D model;
prior to determining whether the geometric parameter of the portion to be supported (110) falls within the preset parameter range, the method further comprises:
determining an average curvature of vertex curvatures of meshes in a region where the portion to be supported (110) is located, wherein the average curvature is an average value of the vertex curvatures of the meshes in the region where the portion to be supported (110) is located;
wherein the geometric parameter of the portion to be supported (110) comprises the average curvature.

6. The method for generating 3D printing data according to claim 4 or 5, wherein the portion to be supported comprises a point to be supported (110) comprises a point to be supported (111), and the distribution axis (222) passes through the point to be supported (111);
creating the customized support head (220) between the corresponding connecting surface (211) and the portion to be supported (110) when the geometric parameter of the portion to be supported (110) does not fall within the preset parameter range, comprises:
creating a predetermined number of discrete points (112), wherein a distance between each of the discrete points (112) and the distribution axis (222) is equal to a width of each sub-support member of the support head (220) with the preset dimensions, and the discrete points (112) are distributed circumferentially relative to the distribution axis (222);
determining distances between the discrete points (112) and the connecting surface (211), wherein one or more discrete points (112) among the discrete points (112) whose distance from the connecting surface (211) is less than or equal to a first threshold are designated as first discrete points (112a); and
creating sub-support members (221) that respectively connect the first discrete points (112a) to the connecting surface (211).

7. The method for generating 3D printing data according to claim 6, wherein among the discrete points (112), one or more discrete points (112) whose distance from the connecting surface (211) exceeds the first threshold are designated as second discrete points (112b);
wherein, when the geometric parameter of the portion to be supported (110) does not fall within a preset parameter range, creating the customized support head (220) between the corresponding connecting surface (211) and the portion to be supported (110), further comprises:
for each second discrete point in the one or more second discrete points, offsetting a position of the second discrete point (112b) to create an offset discrete point (113), wherein the offset discrete point (113) is located on the portion to be supported (110), a distance between the offset discrete point (113) and the distribution axis (222) is equal to the width of each sub-support member of the support head (220) with the preset dimensions;
determining a distance between the offset discrete point (113) and the connecting surface (211); and
creating a sub-support member (221) that respectively connects the offset discrete point (113) and the connecting surface (211) when the distance between the offset discrete point (113) and the connecting surface (211) is less than or equal to the first threshold.

8. The method for generating 3D printing data according to claim 7, wherein when the geometric parameter of the portion to be supported (110) does not fall within the preset parameter range, creating the customized support head (220) between the corresponding connecting surface (211) and the portion to be supported (110), further comprises:
omitting creation of a sub-support member (221) between the offset discrete point (113) and the connecting surface (211) in response to the distance between the offset discrete point (113) and the connecting surface (211) exceeding the first threshold.

9. The method for generating 3D printing data according to any one of claims 4 to 8, wherein, when the geometric parameter of the portion to be supported (110) does not fall within the preset parameter range, creating the customized support head (220) between the corresponding connecting surface (211) and the portion to be supported (110) further comprises:
when a number of sub-support members (221) of the customized support head (220) is less than a number of sub-support members (221) of the support head (220) with the preset dimensions, on a basis of the sub-support members (221) of the support head (220) with the preset dimensions, increasing a thickness and/or width of each of the sub-support members (221) so that the width of each of the sub-support members (221) of the customized support head (220) is greater than the width of each of the sub-support members (221) of the support head (220) with the preset dimensions, and/or the thickness of each of the sub-support members (221) of the customized support head (220) is greater than the thickness of each of the sub-support members (221) of the support head (220) with the preset dimensions.

10. The method for generating 3D printing data according to any one of claims 2 to 8, wherein the distribution axis (222) is perpendicular to the connecting surface (211).

11. The method for generating 3D printing data according to any one of claims 1 to 10, wherein a cross-sectional area of the support head (220) gradually decreases in a direction from the portion to be supported (110) to the corresponding connecting surface (211).

12. A method for printing a 3D model, comprising:
acquiring 3D printing data generated based on the method for generating 3D printing data according to any one of claims 1 to 11; and
executing a printing task based on the 3D printing data.

13. An electronic device, comprising a processor and a memory, wherein the memory stores a program or instructions for execution on the processor, and when the program or instructions are executed by the processor, the processor is caused to implement the method for generating 3D printing data according to any one of claims 1 to 11 or the method for printing a 3D model according to claim 12.

14. A non-transitory storage medium, storing a program or instructions thereon, wherein when the program or instructions are executed by a processor, the processor is caused to implement the method for generating 3D printing data according to any one of claims 1 to 11 or the method for printing a 3D model according to claim 12.

15. A computer program product, stored on a storage medium, when the computer program product is executed by a processor, the processor is caused to implement the method for generating 3D printing data according to any one of claims 1 to 11 and/or the method for printing a 3D model according to claim 12.
